# EUROPÄISCHE PATENTSCHRIFT

(11) **EP 0 697 079 B1**
(45) Veröffentlichungstag und Bekanntmachung des Hinweises auf die Patenterteilung: **23.10.1996**
(21) Anmeldenummer: 94916227.5
(22) Anmeldetag: 11.05.1994
(51) Int. Cl.: F16H 57/02

(54) **HALTERUNG FÜR EIN ZAHNRAD**
GEAR WHEEL SUPPORT
SUPPORT DE ROUE DENTEE

(30) Priorität: 14.05.1993 DE 4316233
(43) Veröffentlichungstag der Anmeldung: 21.02.1996
(73) Patentinhaber: ZF FRIEDRICHSHAFEN Aktiengesellschaft, D-88038 Friedrichshafen (DE)
(72) Erfinder: BURI, Gerhard, D-88048 Friedrichshafen (DE); BADER, Josef, D-88045 Friedrichshafen (DE)
(86) Internationale Anmeldenummer: EP9401520
(87) Internationale Veröffentlichungsnummer: WO9427066

(56) Entgegenhaltungen:
- EP-A- 0 390 368
- US-A- 5 179 866
- REVUE TECHNIQUE DIESEL, Nr.12, 1984, BOULOGNE-BILLANCOURT Seite 65 'boite de vitesse Fuller'

## Beschreibung

Die Erfindung betrifft eine Halterung für ein Zahnrad, vorzugsweise für ein Zahnrad in einem Zahnräderwechselgetriebe.

In Wechselgetrieben werden Zahnräder verwendet, die einer axialen Fixierung bedürfen, radial jedoch frei beweglich sind. Insbesondere bei nicht in den Kraftfluß geschalteten Antriebszahnrädern eines solchen Getriebes kann für einen funktionierenden Lastausgleich die Fixierung in axialer Richtung und die Freiheit in radialer Richtung erforderlich sein. Die Zahnräder können dabei mit einer durchgehenden Innenprofilierung versehen sein. Das Innenprofil weist im allgemeinen einen Einstich auf, in dem axiale Halterungsvorrichtungen zur Anwendung kommen.

Ebenfalls sind Zahnradhalterungen bekannt, bei denen in der Verzahnung auf der Welle Einstiche vorgesehen sind, die ein Verdrehen einer mit einer Innenverzahnung versehenen Haltescheibe in diesem Einstich erlauben. So sind derartige Halterungen beispielsweise aus der Europäischen Patentanmeldung 0 390 368 bekannt. Dort wird die im Einstich in der Welle verdrehte Haltescheibe in der verdrehten Stellung durch einen Keil gehalten.

Aufgabe der Erfindung ist es, eine Halterung für ein Zahnrad anzugeben, die eine sichere axiale Fixierung und ein radiales Spiel ermöglicht.

Die Aufgabe wird durch Halterungen mit den kennzeichnenden Merkmalen nach den Ansprüchen 1 und 2 gelöst.

Zur Erläuterung wird die Erfindung anhand einer Zeichnung beschrieben.
Es zeigen:
- Fig. 1: eine Darstellung der Bestandteile der erfindungsgemäßen Halterung;
- Fig. 2: eine Darstellung der zusammengesetzten Bestandteile;
- Fig. 3: einen teilweisen Längsschnitt entsprechend der Linie III-III in Fig. 2 aus einer Darstellung der Anordnung in einem Getriebe;
- Fig. 4: eine veränderte Anschlagscheibe;
- Fig. 5: die zusammengesetzte Halterung nach Fig. 4 und
- Fig. 6: die schematische Darstellung des Zahneingriffs.

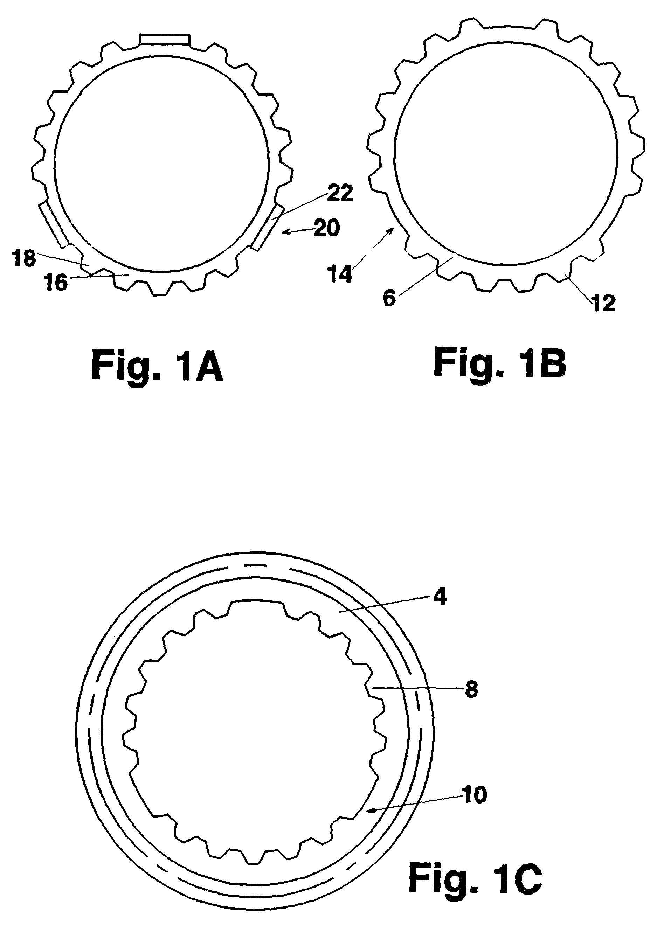

In Fig. 1 sind die Bestandteile der Halterung dargestellt. So zeigt Fig. 1A die Sperrscheibe, Fig. 1B die Anschlagscheibe und Fig. 1C das Zahnrad. Es wird erfindungsgemäß vorgeschlagen, in die durchgehende, innere Profilierung eines Zahnrades 4 mit Einstich eine erste Scheibe 6 als Anschlagscheibe einzufügen. Die Innenverzahnung 8 des Zahnrades 4 weist in wenigstens einem Bereich ihres Innendurchmessers eine Ausnehmung 10 auf, an der wenigstens ein Zahn der Verzahnung nicht vorgesehen ist. Vorzugsweise sind drei dieser Ausnehmungen 10 vorzusehen, wie in Fig. 1 dargestellt. Die Ausnehmungen 10 sollten um jeweils gleiche Winkel am Umfang verteilt angeordnet werden.

Die erste Scheibe 6 weist eine Außenverzahnung 12 auf, die mit der Innenverzahnung 8 des Zahnrades 4 korrespondiert und die über ebenfalls wenigstens eine Aussparung 14 in ihrer Außenverzahnung verfügt. Diese Aussparung 14 ist so ausgeführt, daß in diesem Bereich wenigstens in Zahn der Außenverzahnung 12 nicht vorgesehen wird. Vorzugsweise sind auch hier drei Ausnehmungen 14 vorzusehen. Die Ausnehmungen 14 sind auf dem Umfang der Anschlagscheibe 6 vorzugsweise unter gleichen Winkeln verteilt.

Die Anschlagscheibe 6 wird im Zahnrad 4 in die Innenverzahnung 8 bis zum Einstich 30 eingefügt und um wenigstens einen Teil eines Zahnes oder einer Zahnlücke in Umfangsrichtung verdreht, bis die Zähne der Innenverzahnung 8 des Zahnrades 4 sich mit den Zähnen der Außenverzahnung 12 der Anschlagscheibe 6 decken. Die Einfügung soll dergestalt vorgenommen werden, daß jeweils die Ausnehmungen der Innenverzahnung 8 des Zahnrades 4 und Ausnehmungen 14 der Außenverzahnung 12 der Anschlagscheibe 6 zur Deckung gelangen. Zur Fixierung in Umfangsrichtung der Anschlagscheibe 6 gegenüber dem Zahnrad 4 und damit zur Vermeidung eines weiteren Verdrehens der Anschlagscheibe 6 wird eine zweite Scheibe als Sperrscheibe 16 ebenfalls in die Innenverzahnung 8 des Zahnrades 4 eingefügt. Diese Sperrscheibe 16 weist eine Außenverzahnung 18 auf, die ebenfalls mit der Innenverzahnung 8 des Zahnrades 4 korrespondiert.

An wenigstens einem Bereich 20 des Außenumfangs ist anstelle von Zähnen wenigstens ein sogenannter "Lappen" oder "Noppen" als Sperrvorrichtung 22 vorgesehen, der gegenüber der Ebene der Sperrscheibe 16 nahezu rechtwinklig abgebogen ist. Vorzugsweise sind auch hier drei derartige Sperrvorrichtungen 22 vorgesehen. Diese "Lappen" oder "Noppen" 22 sind so am Umfang der Sperrscheibe 16 verteilt angeordnet, daß sie in die Ausnehmungen 10, 14 von Innenverzahnung 8 des Zahnrades 4 und Außenverzahnung 12 der Anschlagscheibe 6 eingepaßt werden können.

Haben die "Noppen" 22 der Sperrscheibe 16 ihren Platz in den Ausnehmungen 10, 14 von Anschlagscheibe 6 und Zahnradinnenverzahnung 8 gefunden, ist eine Verdrehung der Anschlagscheibe 6 im Einstich der Innenverzahnung 8 des Zahnrades 4 nicht mehr möglich. Dabei kann die Ausnehmung 14 der Anschlagscheibe 6 so ausgestaltet sein, daß über einen Teil ihrer Tiefe die Zahngebung der Außenverzahnung 12 bestehen bleibt und die Sperrvorrichtung 22 der Sperrscheibe 16 so ausgebildet ist, daß diese Sperrvorrichtung nur in den verbleibenden Teil der Ausnehmung 14 hineinragt. Ebenfalls kann die Sperrvorrichtung 22 der Sperrscheibe 16 so gestaltet sein, daß sich die Abwinklung nur auf einen Teil der Wandstärke der Sperrscheibe 16 bezieht und in dem verbliebenen Teil die Zahngebung der Außenverzahnung 18 der Sperrscheibe 16 erhalten bleibt.

Der Außendurchmesser von Anschlagscheibe 6 und Sperrscheibe 16 ist etwas geringer ausgestaltet als der Innendurchmesser des Einstichs 30 im Zahnrad 4. Daher bleibt radiales Spiel des Zahnrades 4 im Bereich des Einstichs 30 erhalten.

Gegen eine axiale Abwanderung der Sperrscheibe 16 auf der die Scheiben 6, 16 und das Zahnrad 4 tragenden Welle kann wenigstens eine Sicherungseinrichtung vorgesehen sein, beispielsweise in Form eines auf der Welle fixierten Sicherungsringes.

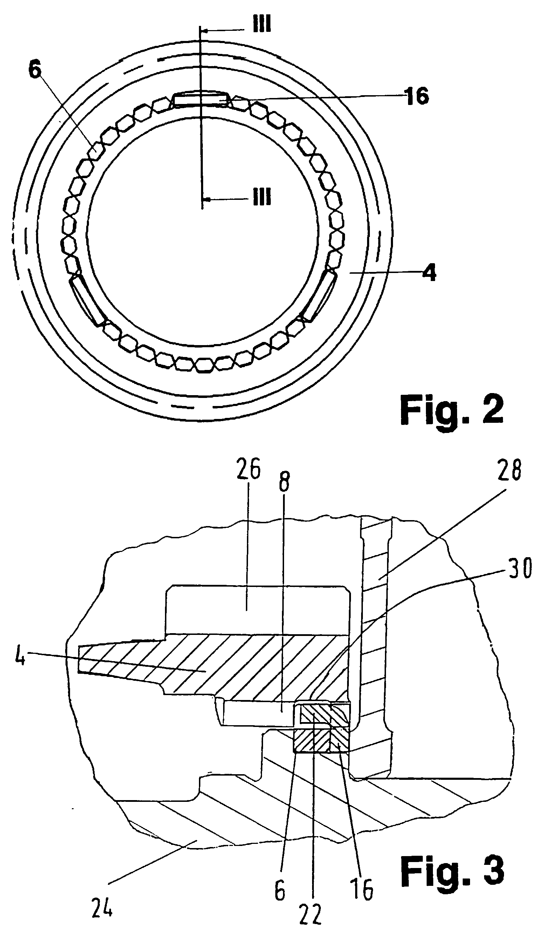

Die Fig. 2 zeigt die drei Bestandteile Zahnrad 4, Anschlagscheibe 6 und Sperrscheibe 16 in zusammengesetzter Anordnung. Dabei ist zu erkennen, daß jeweils die Zähne von Innenverzahnung 8, Außenverzahnung 12 und Außenverzahnung 18 übereinanderstehen und zur Deckung kommen. Der Eingriff der Sperrvorrichtungen 22 in die Ausnehmungen 10, 14, 20 ist ebenfalls zu sehen.

Die Fig. 3 zeigt einen Ausschnitt aus einer Darstellung der eingebauten Halterung in einem Getriebe. Auf einer Welle 24 ist das Zahnrad 4 mit Außenverzahnung 26 und Innenverzahnung 8 angeordnet. In die Anschlagscheibe 6 ragt die Sperrvorrichtung 22 der Sperrscheibe 16 hinein. Die Sperrscheibe 16 ist axial auf der Welle 24 durch ein hier nicht näher bezeichnetes Bauteil 28 des Getriebes gehalten.

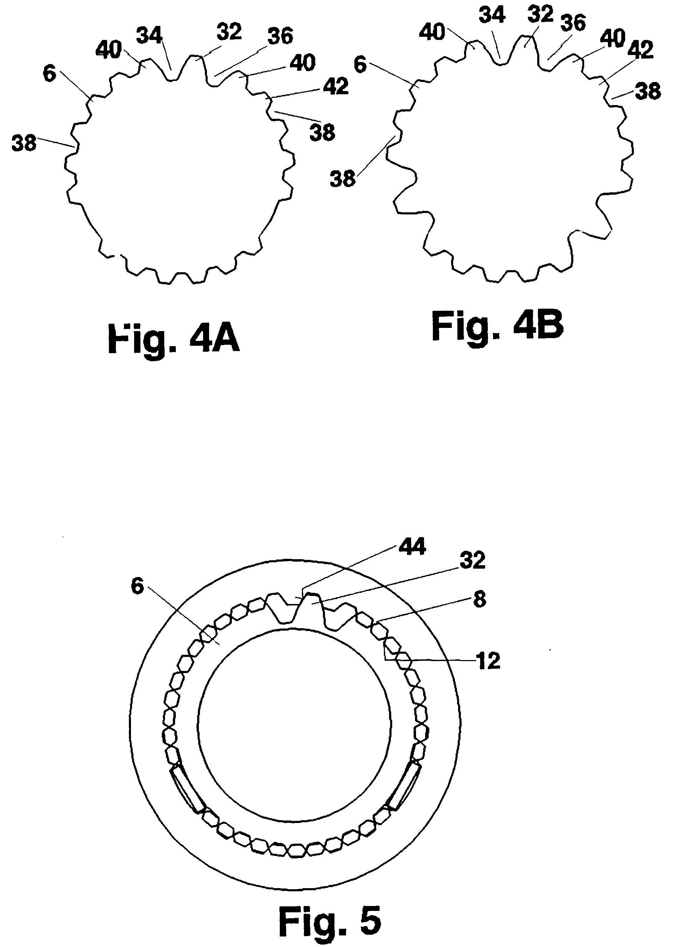

Die Fig. 4A zeigt eine veränderte Anschlagscheibe zur Halterung eines Zahnrades, wodurch ermöglicht wird, gegenüber der oben genannten Halterung eine der genannten Scheiben einzusparen.
Dazu weist die Anschlagscheibe 6 eine veränderte Zahngeometrie auf, bei der wenigstens ein Zahn 32 so ausgestaltet ist, daß er längere Zahnflanken aufweist, aber den Außendurchmesser der Anschlagscheibe 6 nicht vergrößert. Das wird erreicht, indem die dem Zahn 32 benachbarten Zahnlücken 34 und 36 tiefer eingeschnitten sind als die übrigen Zahnlücken. Dargestellt ist in der Fig. 4 nur ein Zahn 32. Vorteilhafterweise lassen sich jedoch drei Zähne 32 am Umfang unter gleichen Winkeln verteilt anordnen (siehe Fig. 4B). Die Zahnlücken 34 und 36 sind nicht nur in ihrer Tiefe, sondern auch in ihrer Breite unterschiedlich zu den Zahnlücken 38 der sonstigen Verzahnung. Damit entsprechen die Zähne 32 in ihrem Abstand zu benachbarten Zähnen 40 auch nicht dem Abstand zweier benachbarter Zähne 40 und 42 zueinander. Der Zahn 32 ist vielmehr so angeordnet, daß er gegenüber der sonstigen Verzahnung um wenigstens einen Teil einer Zahnbreite in Umfangsrichtung versetzt ist.

Eine derartig geformte Scheibe läßt sich nicht mehr in die gleichmäßig ausgestaltete Innenverzahnung eines Zahnrades 43 einfügen. Daher werden die Zähne 32 vor ihrer Montage in das Zahnrad 43 wenigstens so weit abgebogen, daß die Anschlagscheibe 6 durch den Innendurchmesser der Innenverzahnung 8 des Zahnrades 43 geschoben werden kann. Sobald die Anschlagscheibe 6 im Einstich 30 des Zahnrades 43 liegt, wird die Anschlagscheibe 6 in diesem Einstich 30 verdreht, bis die Zähne 32 mit einer Zahnlücke der Innenverzahnung 8 des Zahnrades 43 übereinstimmen. In dieser Stellung liegen die Zähne 32 der Anschlagscheibe 6 in Zahnlücken der Innenverzahnung 8 des Zahnrades 43, während die sonstigen Zähne 40 bzw. 42 der Anschlagscheibe 6 wenigstens mit einem Teil ihrer Zahnbreite eine Überdeckung mit den Zähnen der Innenverzahnung 8 des Zahnrades 43 aufweisen. Eine axiale Verschiebung des Zahnrades 43 gegenüber der Anschlagscheibe 6 ist nun nicht mehr möglich. Um eine weitere Verdrehung der Anschlagschiebe 6 im Einstich des Zahnrades 43 zu vermeiden, werden die Zähne 32 so weit gebogen, daß die Außenzahnflanken der Zähne 32 mit den Innenzahnflanken der Zahnlücken, in denen sie sich befinden, bei einer Verdrehung zur Anlage kommen können.

Die Fig. 5 zeigt die zusammengesetzte Anordnung des Zahnrades 43 und der Anschlagscheibe 6. Dabei decken sich im verdrehten Zustand der Anschlagscheibe 6 die Zähne der Innenverzahnung 8 des Zahnrades 43 mit den Zähnen der Außenverzahnung 12 der Anschlagscheibe 6. Die Zähne 32 der Anschlagscheibe 6 liegen in Zahnlücken 44 des Zahnrades 43. Die axiale Verschiebung von Zahnrad 43 und Anschlagscheibe 6 zueinander wird durch die Zähne der Innenverzahnung 8 und Außenverzahnung 12 erreicht, während eine weitere Verdrehung der Anschlagscheibe 6 durch die Zähne 32 verhindert wird.

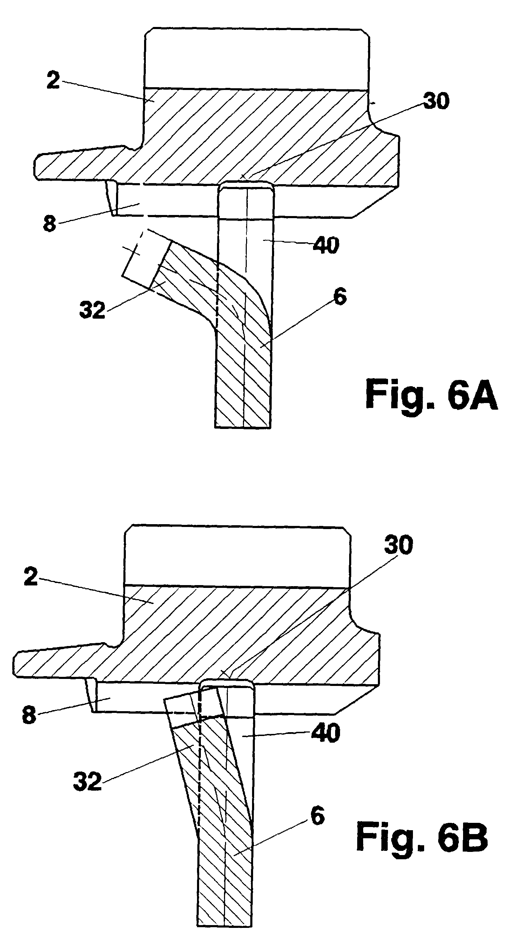

Die Fig. 6A zeigt die schematische Darstellung eines Zahnrades 43 und einer Anschlagscheibe 6, die in einem Einstich 30 des Zahnrades 43 angeordnet ist. Die Anschlagscheibe 6 weist dabei den Montagezustand mit weit abgebogenem Zahn 32 auf, während die weiteren Zähne 40 bzw. 42 im Einstich 30 liegen.

Die Fig. 6B zeigt die schematische Darstellung eines Zahnrades 43 und einer Anschlagscheibe 6, die in einem Einstich 30 des Zahnrades 43 angeordnet ist. Die Anschlagscheibe 6 weist dabei den Endzustand mit zurückgebogenem Zahn 32 auf, während die weiteren Zähne 40 bzw. 42 im Einstich 30 liegen. Der Zahn 32 überschneidet sich dabei mit der Innenverzahnung 8 des Zahnrades 43.

### Bezugszeichen

- 4: Zahnrad
- 6: Anschlagscheibe
- 8: Innenverzahnung
- 10: Ausnehmung
- 12: Außenverzahnung
- 14: Aussparung
- 16: Sperrscheibe
- 18: Außenverzahnung
- 20: Bereich des Außenumfangs
- 22: Sperrvorrichtung
- 24: Welle
- 28: Bauteil des Getriebes
- 30: Einstich
- 32: Zahn
- 34: Zahnlücke
- 36: Zahnlücke
- 38: Zahnlücke
- 40: Zahn
- 42: Zahn
- 43: Zahnrad
- 44: Zahnlücke

## Patentansprüche

1. Halterung für ein Zahnrad (14) mit Innen- und Außenverzahnung (8, 12) und einem in der Innenverzahnung (8) in Umfangsrichtung verlaufenden Einstich (30), dadurch **gekennzeichnet**, daß
- die Innenverzahnung (8) des Zahnrades (4) wenigstens eine Ausnehmung (10) in axialer Richtung aufweist und
- eine erste Scheibe (6) vorgesehen ist, die eine Außenverzahnung (12) trägt, welche mit der Innenverzahnung (8) des Zahnrades (4) korrespondiert und wenigstens eine Ausnehmung (14) in axialer Richtung beinhaltet, die mit der Ausnehmung (10) der Innenverzahnung (8) des Zahnrades (4) zur Deckung zu bringen ist, wobei diese erste Scheibe (6) mit ihrer Außenverzahnung (12) durch die Innenverzahnung (8) des Zahnrades (4) bis zum Einstich (30) einbringbar ist und in diesem in Umfangsrichtung um wenigstens einen Teil eines Zahnes oder einer Zahnlücke verdrehbar ist, wodurch die Deckung der Ausnehmungen (10, 14) und die Deckung von wenigstens Teilen von Zähnen der Innenverzahnung (8) des Zahnrades (4) und Außenverzahnung (12) der ersten Scheibe (6) erzielbar ist und
- eine zweite Scheibe (16) vorgesehen ist, die eine Außenverzahnung (18) aufweist, welche mit der Innenverzahnung (8) des Zahnrades (4) korrespondiert und wenigstens eine Sperrvorrichtung (22) trägt, die in wenigstens die eine Ausnehmung (14) der ersten Scheibe (6) und wenigstens die eine Ausnehmung (10) der Innenverzahnung (8) des Zahnrades (4) einfügbar ist und
- wenigstens eine Sicherungseinrichtung (28) vorgesehen ist, die eine axiale Bewegung der zweiten Scheibe (16) entgegen der Einfügerichtung in die Ausnehmungen (10, 14) verhindert.

2. Halterung für ein Zahnrad (4) mit Innen- und Außenverzahnung (8, 12) und einem in der Innenverzahnung (8) in Umfangsrichtung verlaufenden Einstich (30), dadurch **gekennzeichnet**, daß
- eine Scheibe (6) vorgesehen ist, die eine Außenverzahnung (12) aufweist, welche mit der Innenverzahnung (8) des Zahnrades (43) korrespondiert und
- wenigstens einen Zahn (32) in ihrer Außenverzahnung (12) beinhaltet, der am Umfang der Außenverzahnung (12) gegenüber den sonstigen Zähnen (40, 42) der Außenverzahnung (12) in Umfangsrichtung versetzt angeordnet ist, wobei
- die Scheibe (6) mit ihrer Außenverzahnung (12) durch die Innenverzahnung (8) des Zahnrades (43) bis zum Einstich (30) einbringbar ist und in diesem in Umfangsrichtung um wenigstens einen Teil eines Zahnes oder einer Zahnlücke verdrehbar ist, wodurch
- die Deckung von wenigstens Teilen von Zähnen (40, 42) der Innenverzahnung (8) des Zahnrades (43) und Zähnen der Außenverzahnung (12) der Scheibe (6) sowie Deckung wenigstens des Zahnes (32) mit einer Zahnlücke (44) der Innenverzahnung (8) erzielbar ist, wonach
- eine Außenzahnflanke wenigstens des Zahnes (32) an einer Innenzahnflanke der Zahnlücke (44) anliegt und
- wenigstens eine Sicherungseinrichtung vorgesehen ist, die eine axiale Bewegung der Scheibe (6) entgegen der Einfügerichtung in den Einstich (30) verhindert.

## Claims

1. Mounting for a gear wheel (4) having internal and external gearing (8, 12) and having a groove (30) extending in a peripheral direction in the internal gearing (8), characterized in that
- the internal gearing (8) of the gear wheel (4) comprises at least one recess (10) in an axial direction and
- a first disk (6) is provided, which carries an external gearing (12), which corresponds with the internal gearing (8) of the gear wheel (4) and comprises at least one recess (14) in an axial direction which may be aligned with the recess (10) of the internal gearing (8) of the gear wheel (4), said first disk (6) with its external gearing (12) being insertable through the internal gearing (8) of the gear wheel (4) as far as the groove (30) and being rotatable in the latter in a peripheral direction by at least part of a tooth or a tooth space so that the alignment of the recesses (10, 14) and the alignment of at least parts of teeth of the internal gearing (8) of the gear wheel (4) and external gearing (12) of the first disk (6) is achievable, and
- a second disk (16) is provided, which comprises an external gearing (18), which corresponds with the internal gearing (8) of the gear wheel (4) and carries at least one locking device (22), which is insertable into at least the one recess (14) of the first disk (6) and at least the one recess (10) of the internal gearing (8) of the gear wheel (4), and
- at least one safety device (28) is provided, which prevents an axial movement of the second disk (16) counter to the direction of insertion into the recesses (10, 14).

2. Mounting for a gear wheel (4) having internal and external gearing (8, 12) and having a groove (30) extending in a peripheral direction in the internal gearing (8), characterized in that
- a disk (6) is provided, which comprises an external gearing (12), which corresponds with the internal gearing (8) of the gear wheel (43), and
- in its external gearing (12) contains one tooth (32) which is disposed on the periphery of the external gearing (12) offset in a peripheral direction relative to the remaining teeth (40, 42) of the external gearing (12),
- the disk (6) with its external gearing (12) being insertable through the internal gearing (8) of the gear wheel (43) as far as the groove (30) and being rotatable in the latter in a peripheral direction by at least part of a tooth or a tooth space so that
- the alignment of at least parts of teeth (40, 42) of the internal gearing (8) of the gear wheel (43) and teeth of the external gearing (12) of the disk (6) as well as alignment at least of the tooth (32) with a tooth space (44) of the internal gearing (8) is achievable, whereupon
- an external tooth flank at least of the tooth (32) lies against an internal tooth flank of the tooth space (44) and
- at least one safety device is provided, which prevents an axial movement of the disk (6) counter to the direction of insertion into the groove (30).

## Revendications

1. Dispositif de maintien pour une roue dentée (4) avec denture intérieure et extérieure (8, 12) et comportant une entaille (30) s'étendant vers la périphérie de la denture intérieure (8), **caractérisé en ce que**
- la denture intérieure (8) de la roue dentée (4) comporte au moins un évidement (10) selon une direction axiale,
en ce que ce dispositif comporte un premier disque (6) pourvu d'une denture extérieure(12) qui correspond à la denture intérieure (8) de la roue dentée (4), et ayant au moins un évidement (14) ménagé selon une direction axiale, qui est agencé pour couvrir l'évidement (10) de la denture intérieure (8) de la roue dentée (4), dans lequel ce premier disque (6) peut être engagé jusque dans l'entaille (30), par sa denture extérieure (12) au moyen de la denture intérieure (8) de la roue dentée (4), et peut être tourné, dans cette entaille, dans le sens de sa périphérie, d'au moins une partie d'une dent ou d'un creux entre les dents, de sorte que l'on puisse réaliser le recouvrement des évidements (10, 14) et le recouvrement au moins partiel de dents de la denture intérieure (8) de la roue dentée (4) et de la denture extérieure (12) du premier disque (6),
- en ce que ce dispositif comporte un second disque (16) pourvu d'une denture extérieure (18), qui correspond à la denture intérieure (8) de la roue dentée (4) et qui porte au moins un dispositif de verrouillage (22) qui est agencé pour être engagé au moins dans l'un des évidements (14) du premier disque (6) et au moins dans l'un des évidements (10) de la denture intérieure (8) de la roue dentée (4), et
- en ce que ce dispositif comporte au moins un dispositif de sécurité (28) qui empêche un mouvement axial du deuxième disque (16) tendant à l'engager dans les évidements (10, 14).

2. Dispositif de maintien pour une roue dentée (4) avec denture intérieure et extérieure (8, 12) et comportant une entaille (30) s'étendant vers la périphérie de la denture intérieure, **caractérisé en ce**
- qu'il comporte un premier disque (6) pourvu d'une denture extérieure (12) qui correspond à la denture intérieure (8) de la roue dentée (43),
- au moins une dent (32) de la denture extérieure (12) qui est décalée dans le sens de la périphérie, par rapport aux autres dents (40, 42) de la denture extérieure (12), dans lequel
- le disque (6) peut être engagé jusque dans l'entaille (30) par sa denture extérieure (12) au moyen de la denture (8) de la roue dentée (43), et peut être tourné dans cette entaille, dans le sens de la périphérie, d'au moins une partie d'une dent ou d'un creux entre les dents, de sorte que l'on puisse réaliser le recouvrement d'au moins une partie des dents (40, 42) de la denture intérieure (8) de la roue dentée (43) et des dents de la denture extérieure (12) du disque (6), ainsi que le recouvrement de la dent (32) au moins et du creux (44) entre les dents de la denture intérieure (8), après quoi,
- un flanc de dent extérieure de la dent (32) au moins, est en appui contre un flanc de dent intérieure dans le creux (44), et
- au moins un dispositif de sécurité est prévu pour empêcher un déplacement axial du disque (6) tendant à l'engager dans l'entaille (30).
